Europäisches Patentamt

European Patent Office

Office européen des brevets

(11) Publication number: **0 347 965**
**A2**

# (12) EUROPEAN PATENT APPLICATION

(21) Application number: 89201446.5

(22) Date of filing: 06.06.89

(51) Int. Cl.⁴: **A62D 3/00 , B09B 3/00 , C02F 9/00**

(30) Priority: 20.06.88 BE 8800701

(43) Date of publication of application:
27.12.89 Bulletin 89/52

(84) Designated Contracting States:
**BE DE ES FR GB IT NL**

(71) Applicant: **"Dredging International"**
**Scheldedijk, 30**
**B-2730 Zwijndrecht(BE)**

(72) Inventor: **D'Haene, Siegfried**
**Pussemierstraat 14**
**B-9000 Gent(BE)**

(74) Representative: **Pieraerts, Jacques et al**
**Bureau Gevers S.A. rue de Livourne 7 bte 1**
**B-1050 Bruxelles(BE)**

(54) A method and a device for purifying dredgings or ground contaminated with polluants.

(57) The invention relates to a method and a device for purifying dredgings or ground contaminated with polluants, wherein in a first desorption phase sequestrants and dispersion means are added to the ground diluted with water or the dredgings and in a subsequent elimination phase polluants are in reactor subjected to a bio-chemical treatment. The abstract refers to the annexed figure.

# A method and a device for purifying dredgings or ground contaminated with polluants

This invention relates to a method for purifying dredgings or ground contaminated with polluants such as heavy metals and organic materials.

Contaminated dredgings or ground signify dredgings on ground containing an inadmissible percentage of organic materials and/or heavy metals.

The term polluant thus mainly refers to these two concepts.

Up to now, contaminated dredgings or grounds are mainly processed or treated by storing or dumping them, whether or not under controlled circumstances. Since the dredgings on the ground are contaminated with heavy metals or with organic materials, a further use of the dredgings or the ground is no longer permissible.

By purifying dredgings or grounds there is created a sales possibility for the treated material since after their treatment the contaminated sediments have become an economically valuable product. The purified dredgings or ground are then again usuable earth. For the protection of the environment, purification is the most appropriate processing technique since the polluants are withdrawn so that they are no longer nuisable for the environment.

The existing purification techniques for contaminated dredgings or ground involve a number of important limitations. Moreover, these techniques are very specific for certain types of polluants.

One of these purification techniques is known as "thermal treatment". This thermal treatment is limited to organically polluted sediments. The temperatures applied in the oven or in the afterburner has to be very high in order to guarantee a complete incineration. That is why incineration requires large amounts of energy, especially in the case of non-dehydrated sediments. The thermal purification requires very large investments which are from an economical point of view pratically not feasible.

Organic extraction is restricted to sediments contaminated with organic materials. Besides some technical problems, organic extraction is always characterized by capacity limitations.

Acid extraction of acid leaching is restricted to the removal of heavy metals from dredgings and grounds. The application of acid extraction is limited by ecological and economical aspects. Acid leaching and neutralisation produce waste water containing a large amount of dissolved salts. Moreover, the required quantities of acid/ base are very high, particularly for strongly buffered sediments.

An object of the present invention is to remove the drawbacks of the purification techniques known up-to now and briefly described hereabove.

To realise this according to the invention, sequestrants for the heavy metals and dispersion means for organic materials are added to the ground diluted with water or to the dredgings in a first desorption phase, and in a subsequent elimination phase the heavy metals and the other polluants are, in a reactor, subjected to a bio-chemical treatment as a result of which the polluant complexes are broken up, decomposed or converted into insoluble polluant precipitates which are susceptible to deposition and removal while an effluent is obtained containing sequestrants and dispersion means.

The invention also relates to a device for purifying dredgings or grounds contaminated with polluants such as heavy metals or organic materials.

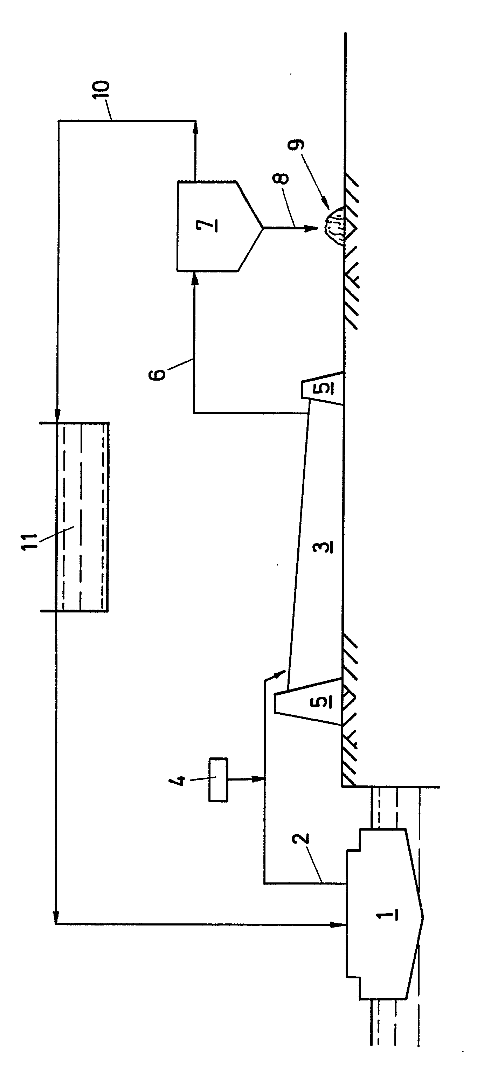

Other details and advantages of the invention will be explained in the following description of a method and a device according to the invention for purifying dredgings or ground contaminated with polluants. This description is only given by way of example and does not limit the scope of the present invention. The reference numerals pertain to the accompanying figure.

This figure is a schematic representation of a possible embodiment of a device for realizing the method according to the invention.

The method illustrated by this figure, will be explained particularly within the scope of the treatment of contaminated dredgings. By treating the contaminated ground, this ground will firstly be diluted with water until a processable dredging or ground is obtained.

The method for purifying dredgings or ground mainly contaminated with heavy metals and/or organic materials can be devided into two partial phases : a desorption phase and an elimination phase.

During the desorption phase, the polluants are chemically dissipated from the solid sediments and taken up in the aqueous phase. In the subsequent elimination phase, the polluants are bio-chemically eliminated from the aqueous phase.

The desorption phase comprises the addition of sequestrants and dispersion means, i.e. chemical compounds, to a suspension of water and contaminated ground or dredgings and intensive mixing of the sequestrants and the dispersion means with the material to be purified.

Simultaneously with the addition of sequestrants and dispersion means, the pH can be adjusted. This additional treatment is optional and the degree of the adjustment is of course dependent on the local circumstances.

During this desorption phase the bond which was formed between the polluants and the sediments is chemically broken up due to the chemical reagents, i.e. the sequestrants and the dispersion means, and the formation of not bound, mobile polluant complexes is realized. Consequently, the so-called desorption can take place simultaneously with the removal of the contaminated sediments.

The subsequent elimination phase comprises the bio-chemical treatment of the liquid phase in a reactor. The treat ment in said reactor is based on the decomposition or breaking up of the polluant complexes and the formation of insoluble polluant precipitates.

This biochemical elimination thus breaks up the bond between the sequestrants and the polluants. A subsequent step comprises a decomposition, sorption and precipitation of the polluants.

Said bio-chemical elimination comprises for example :

a) a precipitation of heavy metals by means of sulfides. Said sulfides being preferably biologically formed sulfides;

b) a sorption of organic micro-polluants and heavy metals on a bacterial biomass which is subsequently eliminated from the aqueous phase;

c) an aerobic or anaerobic biological decomposition of polluants by specifically adapted mixed cultures or by microbic species genetically manipulated for that purpose;

d) said elimination processes may also be partly or completely activated by adding specific enzymes, dissolved or immobilized on a carrier material.

The elimination phase allows, on the one hand to recycle the chemical reagents which constitutes an advantage from an economical point of view and, on the other hand, the polluants may be strongly concentrated. The final residual material consisting of strongly polluated or contaminated materials is extremely limited in volume. Such a residual material may be appropriate for recycling certain polluants, especially the heavy metals, or has to be dumped in a controlled manner.

The above described method offers a number of specific advantages :

1) the purification problem is shifted from a ground treatment to a water treatment. Practically, this offers substantial advantages as well from a mechanical point of view as from the point of view of volume - and time - saving.

2) the necessary amounts of chemical reagents are limited with respect to the volume of treated dredgings or ground As already explained hereabove, there is a possibility to recycle a large amount of the chemical reagents.

3) the method according to the invention requires a minimal number of operations. In most cases, the method is realized locally on the contaminated ground or dredgings. Only a minimal transport of the ground or dredging is required.

4) the method is further characterized by a fast execution. The chemical desorption as well as the bio-chemical elimination are quick-acting processes.

5) the method is further characterized by a minimal infrastructural requirement. Moreover, the necessary device is transportable. Consequently, small devices will be able to treat large volumes of contaminated ground and dredgings.

A possible embodiment of a device for realizing the above described method is illustrated in the accompanying figure

The dredgings or, in case the contaminated ground, are supplied by an appropriate transport means 1 and pumped towards a basin 3 by means of a press pipe 2. Said chemical reagents are injected in the press pipe 2. Use is made of the turbulences in the press pipe, whether or not activated by appropriate accessories 4, to obtain a good mixing of the contaminated dredgings and the reagents. The desorption phase occurs in the press pipe where the polluants are chemically dissipated from the solid phase and absorbed in the aqueous phase.

In the basin 3, a deposition basin, the transported materials are separated in a solid sedimentated phase (purified sediments) and in a liquid phase containing the polluants in a water dissolvable form.

The deposition basin can in a usual manner be staked by small banks 5 or can be formed by another receptacle.

The liquid phase or supernatant of the deposition basin 3 flows off into reactor 7 or is pumped through pipe 6 to reactor 7. In reactor 7 the elimination phase takes place wherein the polluant complexes are decomposed or broken up. During this step of the method auxilliary precipitation means may be added into the reactor.

During the elimination phase there are formed insoluble polluant precipitates causing a residual flow. The residual flow contains the polluants in a strongly concentrated form. These are being removed through pipe 8.

The strongly contaminated waste materials are represented schematically by the reference number 9.

An effluent is removed from the reactor through a pipe 10. Said effluent contains a high percentage of reagents and is removed via an optional reserve basin 11 or receptacle. The effluent is reused as extraction liquid. One must keep in mind that the schematic representation of the device based on the described method may present many variants.

Previously to the above described method the sediments may be separated into sand and silt. This allows to treat only the separated silt according to the method of the invention and, if necessary, to treat the sand fraction by other, known techniques. Likewise, the materials to be treated can be partly or completely dehydrated according to also known techniques, before and/or after treatment.

Further it is clear that the invention is not limited to the above described embodiment and that many modifications can be brought on this embodiment without leaving the scope of the present patent application.

**Claims**

1. A method for purifying dredgings or ground contaminated with polluants such as heavy metals and organic materials, characterized in that in a first desorption phase sequestrants for the heavy metals and dispersion means for organic materials are added to the ground diluted with water or to the dredgings and in a subsequent elimination phase the heavy metals and the other polluants are in a reactor subjected to a bio-chemical treatment as a result of which the polluant complexes are broken up, decomposed or converted into insoluble polluant precipitates which are susceptible to deposition and removal, while an effluent is obtained containing sequestrants and dispersion means.

2. A method as claimed in claim 1, characterized in that said bio-chemical treatment comprises precipitating the heavy metals by means of sulfides.

3. A method as claimed in claim 1, characterized in that said bio-chemical treatment comprises a sorption of organic and inorganic micro-polluants, such as i.a. heavy metals on a microbic biomass.

4. A method as claimed in claim 1, characterized in that said bio-chemical treatment comprises the biological decomposition of the polluants.

5. A method as claimed in claim 1, characterized in that said biochemical treatment comprises the biological convertion of the polluants by genetically manipulated microbic species.

6. A method as claimed in claim 1, characterized in that said bio-chemical treatment comprises the biological convertion of the polluants by specific enzymes, dissolved or immobilized on a carrier material.

7. A method as claimed in any one of the claims 1-6, characterized in that for the purifying of the dredgings the mixing of the polluants is realized in a usual press pipe for dredgings.

8. A method as claimed in any one of the claims 1-7, characterized in that said sequestrants and dispersion means present in the effluent are used by leading them back to the remaining dredgings or ground to be purified.

9. A device for purifying dredgings or ground, contaminated with polluants such as heavy metals or organic materials as claimed in one or more of the claims 1-8, characterized in that it comprises :

a) a press pipe (2) extending between a supply means and a deposition basin (3), provided for the sinking of the dredgings or the ground which pipe is provided for introducing said sequestrants and dispersants.

b) a reactor (7) for the treatment of the aqueous phase of the dredgings or the ground diluted with water and provided for removing the precipitated heavy metals and organic materials.

10. A device as claimed in claim 9, characterized in that means are provided in said press pipe (2) for mixing the dredgings or ground with said sequestrants and dispersion means.

11. A device as claimed in any one of claims 9 and 10, characterized in that it comprises a unit for dehydrating the purified dredgings or ground originating from the deposition basin.

12. A device as claimed in any one of claims 9 and 10, characterized in that it comprises a unit for sluicing the purified dredgings or ground originating from the deposition basin.